# FASCICULE DE BREVET EUROPEEN

(11) **EP 2 724 201 B1**
(45) Date de publication et mention de la délivrance du brevet: **05.08.2015**
(21) Numéro de dépôt: 12731595.0
(22) Date de dépôt: 21.06.2012
(51) Int. Cl.: G05B 19/4097, G06T 17/20

(54) **PROCEDE D'USINAGE ADAPTATIF POUR AUBES DE FONDERIE**
ADAPTIVES BEARBEITUNGSVERFAHREN FÜR GESCHMOLZENE SCHAUFELN
ADAPTIVE MACHINING METHOD FOR SMELTED BLADES

(30) Priorité: 21.06.2011 FR 1155424
(43) Date de publication de la demande: 30.04.2014
(73) Titulaire: Snecma, 75015 Paris (FR)
(72) Inventeur: LOUESDON, Yvon Marie-Joseph, F-77550 Moissy-Cramayel (FR); TAMI-LIZUZU, Joseph, F-77550 Moissy-Cramayel (FR); QUACH, Daniel, F-77550 Moissy-Cramayel (FR); WEHRER, Patrick, F-77550 Moissy-Cramayel (FR); LEGEAI, Didier, F-77550 Moissy-Cramayel (FR)
(74) Mandataire: Gevers France
(86) Numéro de dépôt international: PCT/FR2012/051421
(87) Numéro de publication internationale: WO 2012/175882

(56) Documents cités:
- EP-A2- 1 398 683
- US-A1- 2010 095 526
- GAO J ET AL: "Adaptive restoration of complex geometry parts through reverse engineering application", ADVANCES IN ENGINEERING SOFTWARE, ELSEVIER SCIENCE, OXFORD, GB, vol. 37, no. 9, 1 septembre 2006 (2006-09-01), pages 592-600, XP025013428, ISSN: 0965-9978, DOI: 10.1016/J.ADVENGSOFT.2006.01.007 [extrait le 2006-09-01]
- SONGLIN DING ET AL: "Flow line machining of turbine blades", INTELLIGENT MECHATRONICS AND AUTOMATION, 2004. PROCEEDINGS. 2004 INTER NATIONAL CONFERENCE ON CHENGDU, CHINA AUG. 26-31, 2004, PISCATAWAY, NJ, USA,IEEE, 26 août 2004 (2004-08-26), pages 140-145, XP010764388, DOI: 10.1109/ICIMA.2004.1384177 ISBN: 978-0-7803-8748-5
- CHEN L-C ET AL: "Reverse engineering in the design of turbine blades - a case study in applying the MAMDP", ROBOTICS AND COMPUTER INTEGRATED MANUFACTURING, ELSEVIER SCIENCE PUBLISHERS BV., BARKING, GB, vol. 16, no. 2-3, 1 avril 2000 (2000-04-01), pages 161-167, XP004198088, ISSN: 0736-5845, DOI: 10.1016/S0736-5845(99)00044-7

## Description

Le domaine de la présente invention est celui de la fabrication des pièces de turbomachines et, plus particulièrement, celui de l'usinage final réalisé sur des pièces issues de fonderie ou de forgeage.

De façon plus générale la présente invention est relative à la finition de pièces chaque fois que l'on a une pièce brute, aux cotes finis, sur laquelle doit encore être effectué un dernier usinage, dit de finition. Il s'applique tout particulièrement aux aubes de turboréacteurs réalisées soit par fonderie soit par forgeage.

Les aubes de turbine des turbomachines sont généralement réalisées par la technique dite de la cire perdue qui permet d'obtenir directement la forme recherchée pour la plus grande partie de la pièce, sans passer par la réalisation d'une pièce brute qu'il faut ensuite usiner pour obtenir sa forme définitive. Cette technique nécessite tout de même un usinage de finition qui comprend des opérations sur le bord d'attaque pour l'enlèvement des amenées de grains, des opérations sur le bord de fuite pour l'enlèvement d'une barrette de bord de fuite et des opérations sur la plate-forme pour son raccordement avec la surface de la pale.

La technique de fonderie ne s'avère en fait pas pleinement efficace pour réaliser les faces d'épaisseurs très fines (ou voiles), comme par exemple au niveau des bords de fuite des aubes et de leurs évents d'évacuation de l'air de ventilation. Pour pallier cette difficulté les extrémités fines des aubes sont réalisées avec une surépaisseur lors de la fonderie qu'il convient de supprimer par usinage en fin de fabrication. Cette méthode pose le problème du recalage du référentiel de positionnement de l'aube dans l'espace qui est utilisé pour cet usinage, avec celui de la pale telle qu'elle sort de fonderie. Dans l'art antérieur le référentiel utilisé est pris sur le pied de l'aube et la pale est usinée à partir de points de référence pris sur ce pied. Cette méthode engendre de nombreuses dispersions dimensionnelles et prend beaucoup de temps à mettre en oeuvre. Du fait d'un possible décalage entre le référentiel pris sur le pied et celui de la pale, il en résulte fréquemment des manques de précision au niveau du raccordement entre la surface de la pale et la surface usinée, avec l'apparition de ressauts à la surface de la pièce.

Par ailleurs il est souhaitable de pouvoir effectuer ces opérations de finition sur une machine-outil à commande numérique afin d'éviter les dispersions dimensionnelles.

Le document Gao J et al, "Adaptive restoration of complex geometry parts through reverse engineering application", décrit un procédé de finition par usinage de la forme d'une aube de turbomachine. En regardant les différences topologiques entre la surface de l'aube mesurée (première surface) et une surface théorique seconde surface), une surface finale (troisième surface), qui est proche de la surface théorique, est usinée. Dans le procédé de Gao J et al, la zone à usiner est délimitée et subdivisée en triangles formant un treillis. La présente invention a pour but de remédier à ces inconvénients en proposant une méthode d'usinage qui permette d'assurer la finition des pièces de fonderie, ou issues de forgeage, en limitant les dispersions dimensionnelles et qui garantisse un bon raccordement des parties issues de fonderie ou de forgeage avec les parties usinées de la surface de la pièce. Un tel usinage est dit adaptatif, car la trajectoire de l'outil qui usine s'adapte à la géométrie de la pièce brute issue.

A cet effet, l'invention a pour objet un procédé de finition par usinage de la forme d'une pièce de turbomachine, dans lequel au moins une zone est issue de fabrication avec une surépaisseur par rapport au profil recherché, ladite surépaisseur formant avec le profil environnant une première surface, l'usinage du procédé ayant pour objet, à l'aide d'un outil adapté, d'éliminer cette surépaisseur pour aboutir à une troisième surface, le profil théorique de la pièce étant par ailleurs défini par une seconde surface, caractérisé en ce qu'il comprend les étapes suivantes pour définir la position à donner au bout dudit outil au cours de l'usinage de ladite zone :
- définition sur la seconde surface d'un quadrillage formé de lignes croisées se coupant en des noeuds et délimitant des carreaux, ledit quadrillage recouvrant la zone à usiner et s'étendant de sorte que la limite extérieure de la zone à usiner soit entièrement comprise à l'intérieur des lignes extérieures du quadrillage,
- définition de la position de chaque point P de contact outil/pièce pour un usinage selon le profil théorique, par une pondération en référence à la position des noeuds Ni du carreau dans lequel il est situé,
- mesure de l'écart delta(Ni) existant, pour chaque noeud Ni situé en dehors de la limite extérieure, entre la première surface au niveau de ce noeud et la position théorique du noeud sur la seconde surface, ledit écart étant mesuré normalement à la seconde surface,
- calcul, de proche en proche, des écarts delta(Nj) pour chaque noeud Nj situé à l'intérieur de la limite extérieure en sélectionnant le carreau auquel appartient ledit noeud et pour lequel les écarts delta(Ni) ou delta(Nj) des autres noeuds sont déjà connus, et en effectuant une interpolation à partir desdits écarts delta(Ni) ou delta(Nj), modulée selon la longueur des segments reliant lesdits noeuds.
- définition de l'écart delta(P) à appliquer en chaque point P pour aboutir à un point P' de contact entre la pièce et l'outil, par rapport au référentiel implanté dans la machine d'usinage, par la somme pondérée des delta(Ni) des noeuds du carreau auquel appartient ledit point P, à l'aide de ladite pondération effectuée en référence aux noeuds Ni.

Ce procédé permet de s'assurer qu'aucun ressaut n'apparaîtra entre la surface usinée et celle qui l'entoure et que ces deux surfaces se rejoignent selon le même plan tangent.

De façon préférentielle la pondération s'effectue en affectant à chaque point P des coefficients de pondération CPi qui correspondent aux poids à donner aux noeuds dudit carreau pour qu'il soit le barycentre desdits noeuds affectés desdits coefficients. Avantageusement les lignes formant le quadrillage sont des lignes droites. Préférentiellement les polygones formant les carreaux sont des polygones à quatre côtés.

Dans un mode alternatif de réalisation les polygones formant les carreaux sont des polygones à trois côtés.

Dans un mode particulier de réalisation au moins un des noeuds situé à l'extérieur de la limite extérieure n'est pas porté par la première surface, l'écart delta(Ni) pour ce point étant alors calculé par une interpolation entre les écarts delta(Ni) des noeuds adjacents portés par ladite première surface, modulée selon la longueur des segments reliant lesdits noeuds.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue de face d'une aube de turbine haute pression d'une turbomachine, brute de fonderie ;
- la figure 2 est une vue de face de l'aube de la figure 1, après les opérations d'usinage de finition par un procédé selon l'invention ;
- la figure 3 est une vue schématique, en perspective, d'une zone à usiner par un procédé selon l'invention ;
- la figure 4 est une vue schématique de la zone de la figure 3 et de son entourage;
- la figure 5 est une vue en perspective de l'intrados d'une aube de turbine usiné selon le procédé de l'invention ;
- la figure 6 est une vue schématique d'un élément issu du découpage de la zone de la figure 3.

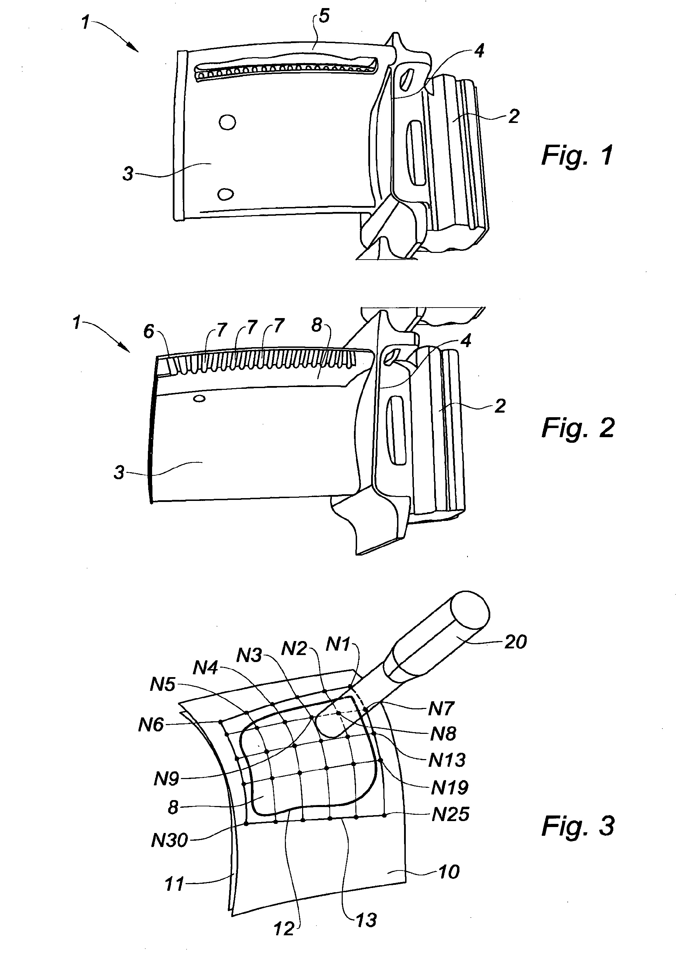

En se référant à la figure 1, on voit une aube mobile 1 de turbine haute pression, en sortie des opérations de fonderie à la cire perdue, vue du côté de son intrados. Elle comprend un pied 2 et une pale 3 séparés l'un de l'autre par une plate-forme 4. Pour des raisons de résistance des parties peu épaisses, des surépaisseurs ont été laissées lors de la fonderie au niveau des évents de sortie du bord de fuite et au niveau du raccordement de la pale 3 avec la plate-forme 4. Une barrette de maintien 5, qui est à supprimer, a également été positionnée parallèlement au bord de fuite pour faciliter les opérations de fonderie.

La figure 2 montre la même aube de turbine, après les opérations d'usinage de finition qui ont consisté à supprimer la barrette de maintien 5 et à désépaissir le bord de fuite 6. Sur l'intrados de l'aube apparaît la zone d'usinage 8 qui, en amincissant l'intrados, laisse apparaître les sorties 7 de ventilation du bord de fuite. Pour des questions de qualité aérodynamique une continuité de tangence est recherchée entre la surface usinée et la surface brute de fonderie de l'intrados de la pale au niveau de la bordure de cette zone d'usinage. Enfin, au cours de cette opération d'usinage, d'une part, le raccordement entre la pale 3 et la plate-forme 4, en particulier aux environs du bord de fuite, a été finalisé et, d'autre part, le sommet de l'aube a été arasé.

Sur la figure 3 on voit deux surfaces extérieures et une zone à usiner correspondant à deux étapes dans la réalisation d'une même pièce issue de fonderie ou de forgeage, dont une partie comporte une surépaisseur qui est à éliminer. Une première surface 10 correspond à celle qui est issue de la fonderie ou du forgeage et une seconde surface 11 qui correspond à la définition théorique telle que conçue dans le modèle numérique de la pièce, à réaliser. On souhaite que la surface 10 se rapproche le plus possible de la surface 11, sans pour autant générer des discontinuités de tangence à la bordure de la zone d'usinage 8. Sur la seconde surface 11 est définie la limite extérieure 12 de la zone, en surépaisseur, à usiner 8, et un quadrillage à segments droits ou curvilignes 13, représenté par ses noeuds qui sont référencés de N1 à N30. Un outil de fraisage 20 est représenté en appui contre la seconde surface 11 au niveau d'un point P qui est situé dans un des carreaux du quadrillage 13. Cet outil, qui a vocation à usiner la zone 8 de façon à amincir l'intrados de l'aube, à l'intérieur de la limite 12, jusqu'à ce que la première surface 10 s'approche de la seconde surface 11, est incliné par rapport à la surface à usiner de façon à obtenir des conditions de coupe optimales.

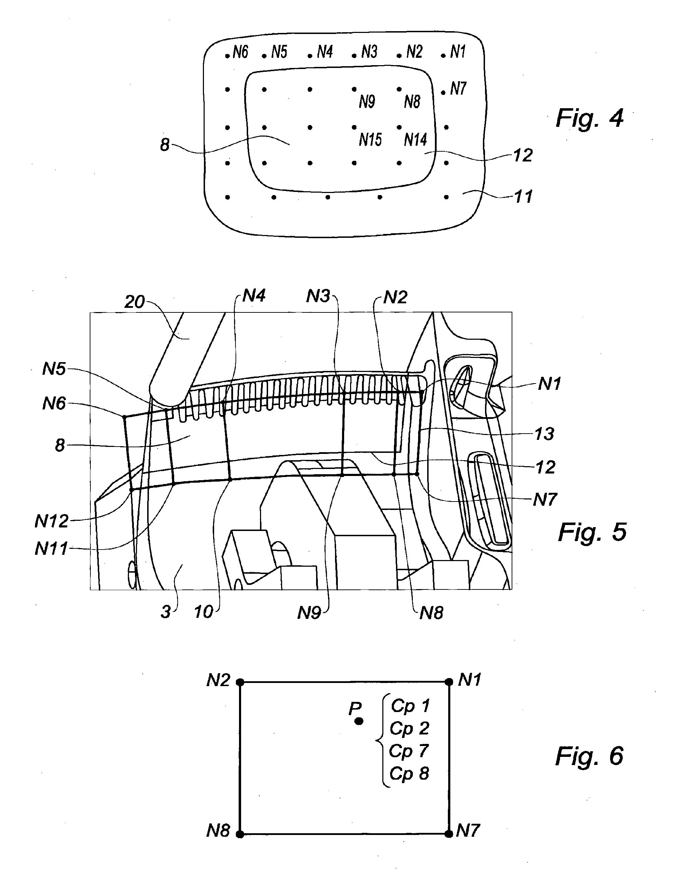

La figure 4 montre la même seconde surface 11 et la zone à usiner 8 avec, dessinée sur elle, la répartition des noeuds du quadrillage 13. Celui-ci est établi de façon qu'il entoure complètement la zone à usiner 8, même si certains points de ses quatre côtés ne se retrouvent pas physiquement sur la seconde surface 11. De cette façon tous les points du quadrillage 13 positionnés sur la zone 8, se situent entre deux autres points du quadrillage qui sont extérieurs à la zone à usiner.

La figure 5 montre l'application d'un quadrillage sur l'intrados d'une aube de turbine HP 1 positionnée sur une machine-outil à commande numérique dont l'outil 20 est représenté au contact de son bord de fuite. Seule une rangée de carreaux est représentée, dont les sommets, ou noeuds, entourent la zone à usiner 8. Dans le cas représenté on remarque que seuls les noeuds référencés N8 à N11 correspondent à des points situés sur la surface de l'intrados de l'aube, alors que, tant les points N1 à N6 du bord extérieur que les points N7 et N12 des bords latéraux du quadrillage 13, sont situés dans l'espace hors de tout support physique associé à la pale 3.

La figure 6 montre un point P de la surface 11 situé dans un carreau du quadrillage 13, qui est identifié par ses noeuds N1, N2, N7 et N8. Sa position dans ce carreau est définie par les poids qu'il faut donner à chacun des sommets du carreau pour que le point P soit le barycentre des quatre sommets, chacun d'eux étant affecté du poids correspondant. On obtient ainsi un ensemble de quatre valeurs (C1, C2, C7 et C8) qui déterminent sans ambigüité, en connaissant le carreau dans lequel il est situé, la position du point P sur la seconde surface 11.

On va maintenant décrire le procédé d'usinage selon l'invention permettant à partir de la première surface 10, d'aboutir à une troisième surface, qui soit la plus proche possible de la seconde surface 11 et qui respecte la continuité de tangence avec la partie de l'aube qui n'est pas touchée par l'usinage.

Le profil de l'aube à réaliser, c'est-à-dire celui de la seconde surface 11, est défini par un modèle numérique théorique, contenu par exemple dans un fichier sous le programme CATIA, alors que la pièce réelle, en sortie de fonderie ou de forgeage, présente un profil surépaissi en divers points, selon la première surface 10, pour prendre en compte des fragilités potentielles ou des difficultés locales de réalisation. Le profil théorique associé à la seconde surface 11 fait l'objet d'une représentation, par la position de ses points et l'orientation du vecteur normal à la seconde surface 11 en ces points, dans le fichier numérique théorique sous CATIA.

La première étape du procédé selon l'invention consiste à définir un quadrillage 13 sur la seconde surface 11, qui entoure la totalité de la zone à usiner 8, c'est-à-dire dont les noeuds à la périphérie sont tous extérieurs à la limite extérieure 12 de la zone à usiner 8. Ce quadrillage est un maillage de carreaux exprimés par des noeuds N1 à N30 dont leurs coordonnées dans un repère cartésien associé à la machine-outil, sont intégrées dans le fichier sous CATIA. De même le fichier sous CATIA comprend les données correspondant, d'une part, à la position du bout de l'outil 20 de la machine qui doit effectuer l'usinage de finition et, d'autre part, à l'orientation de l'axe de celui-ci.

La seconde étape consiste à modéliser le parcours que doit suivre l'outil 20 lors de l'usinage de la première surface 10 pour que le point de contact entre lui et la pièce décrive la seconde surface 11 dans le cas où les points extérieurs à la zone à usiner 8 se trouveraient placés idéalement, c'est-à-dire sur la première surface 10. Ce parcours est défini, d'une part, par la succession des positions d'un point P qui circule à l'intérieur de la zone à usiner 8 et, par là, traverse chacun des carreaux du quadrillage 13 et, d'autre part, par l'orientation que doit prendre l'axe de l'outil en chacun de ces points P. Pour cela chaque point P est défini par rapport aux quatre noeuds du carreau dans lequel il se trouve à l'aide de quatre coefficients, dits coefficients pondérateurs C_{P}i (i étant le numéro de référence du noeud en question). Chaque coefficient pondérateur correspond au poids dont il faut affecter le noeud correspondant pour que le point P soit le barycentre de ces quatre noeuds. En d'autres termes plus le point P est proche d'un noeud, plus le coefficient affecté à ce noeud est élevé et, inversement, les noeuds les plus éloignés se voient affectés d'un coefficient faible. Et afin de rendre unique la définition des ces coefficients pondérateurs ils sont réduits proportionnellement les uns aux autres pour que leur somme soit égale à 1. A titre d'exemple si le point P est au centre du carreau les quatre coefficients sont égaux à 0.25 ; s'il est proche d'un des noeuds, tel qu'on le voit sur la figure 6, le coefficient C_{P}1 sera égal à 0.5 alors que les trois autres seront respectivement égaux à 0.35 pour C_{P}2, 0.10 pour C_{P}7 et 0.05 pour C_{P}8.

Le fichier constitué par les pondérations des points P à balayer par l'outil d'usinage et par les orientations correspondantes de l'axe de l'outil est alors converti en un format compréhensible par la machine à commande numérique et chargé dans son logiciel. L'étape suivante consiste à recaler le modèle numérique introduit dans le fichier sous CATIA avec la surface réelle de l'aube, c'est-à-dire avec la première surface 10. Cette étape permet de s'assurer que la troisième surface coïncidera parfaitement avec la première surface 10 à la périphérie de la zone à usiner 8 et donc qu'il n'y aura pas de ressaut en passant de la partie de la pale extérieure à la zone à usiner 8 à cette zone. Pour cela l'invention prévoit une mesure par palpage sur la pièce réelle, de façon normale en chaque point de la surface de la pale, de la position des noeuds qui sont situés à la périphérie de la zone à usiner 8. Ce palpage donne pour chacun de ces points une valeur d'écart, dénommée delta, entre la position du point considéré dans le fichier théorique sous CATIA et le point réel vu par le palpeur. L'application d'une correction égale à cet écart delta sur la position commandée du bout de l'outil 20, le long d'une direction normale à la surface, permet de garantir que pour tous les noeuds extérieurs à la zone à usiner 8 le bout de l'outil affleurera la surface de la pale sans l'usiner ni en être distant.

A titre d'exemple en relation avec la figure 3, sont mesurés les deltas des noeuds N1 à N6, des noeuds N7, N13, N19 et N25 qui sont situés sur le bord droit de la zone 8, des noeuds N6, N12, N18, N24 et N30 qui sont situés sur le bord gauche et des noeuds N25 à N30 qui sont situés sur le bord inférieur.

L'invention préconise ensuite de définir des deltas, dits delta(Ni), pour tous les noeuds Ni, en se basant sur les deltas relevés sur les noeuds extérieurs à la zone à usiner 8. Les deltas des noeuds situés à l'intérieur de la zone à usiner sont ainsi définis par interpolation entre les deltas des noeuds adjacents pour lesquels un delta a déjà été mesuré ou calculé.

A titre d'exemple, en se référant à la figure 3, le delta du noeud N8 est défini par interpolation entre les deltas des noeuds N1, N2 et N7, en prenant en compte la longueur relative des segments reliant ce noeud N8 à ces trois autres noeuds. Ensuite le delta du noeud N9 se calcule à partir des valeurs mesurées des deltas des noeuds N2 et N3 et de la valeur calculée du delta du noeud N8. En poursuivant cette opération pas à pas sur tous les carreaux pour lesquels trois des quatre noeuds ont un delta déjà connu, on détermine de proche en proche un delta pour tous les noeuds.

Dans le cas particulier où l'on voudrait usiner selon le profil théorique de la pale, il suffirait alors de donner la valeur zéro aux deltas des points intérieurs à la zone à usiner 8.

L'étape suivante selon l'invention consiste à définir un écart de positionnement delta pour tous les points P' de contact entre la pièce et l'outil 20 lors de l'usinage de finition. Pour cela le calcul de ce delta prend en compte les coefficients pondérateurs du point P calculés précédemment et les écarts delta(Ni) des noeuds du carreau dans lequel se trouve le point P. Le delta au point P, c'est-à-dire la correction à apporter au point P de la seconde surface 11, est défini comme étant égal à la somme des valeurs obtenues en multipliant chaque delta d'un noeud par le coefficient pondérateur qui lui est associé.

Dans l'exemple du point P situé dans le carreau formé par les quatre noeuds N1, N2, N7 et N8, la valeur de delta(P) est égale à C_{P}1*delta (N1) + C_{P2}*delta (N2) + C_{P}7*delta (N7) + C_{P}8*delta (N8).

Cet écart delta(P), qui s'étend selon la normale à la seconde surface 11 au point P, est ensuite projeté sur les axes de référence de la machine-outil pour déterminer les trois composantes de la correction à appliquer aux coordonnées cartésiennes données au programme qui pilote le positionnement du bout de l'outil lors de l'usinage de finition.

L'usinage s'effectue ainsi par une machine-outil à commande numérique pour laquelle la position du bout d'outil est à tout instant corrigée de la valeur issue des deltas des noeuds du carreau considéré et des coefficients pondérateurs du point où se trouve ledit bout d'outil.

Du fait qu'il y a un recalage de la position du bout de l'outil sur des noeuds qui sont proches de la zone à usiner 8 et qu'il y a une interpolation réalisée à partir de ces noeuds on est assuré que la troisième surface ainsi obtenue sera tangente à la surface non usinée de l'intrados et qu'il n'y aura pas de ressaut entre la zone à usiner 8 et la face de la pale 1 qui entoure cette zone.

Le procédé selon l'invention a été décrit ci-dessus dans un cas, comme illustré sur la figure 4, où tous les noeuds extérieurs à la zone à usiner 8 sont physiquement portés par la première surface 10, c'est-à-dire des noeuds pour lesquels il est possible de mesurer leur écart delta à l'aide d'un outil de palpage.

En se référant à la figure 5, on voit que le quadrillage 13 peut comprendre des noeuds qui sont extérieurs à la zone d'usinage 8 mais qui ne sont pas portés par la face intrados de l'aube 1. Pour ces noeuds l'invention préconise de leur affecter un delta obtenu par interpolation linéaire entre les deltas des noeuds adjacents qui sont portés par la première surface 10, en tenant là encore compte de la longueur des segments qui relient le noeud considéré aux noeuds à partir desquels est effectuée l'interpolation.

Dans l'exemple de quadrillage représenté sur la figure 5 seuls les noeuds N8 à N11 peuvent faire l'objet d'une mesure par palpeur. La valeur du delta donnée aux noeuds 7 et 12 est respectivement, celle des noeuds 8 et 11 et celle des noeuds 1 à 6 est prise égale, respectivement, à celle des noeuds 7 à 12.

Bien que l'invention ait été décrite avec un quadrillage formé de carreaux à quatre côtés, elle peut également être mise en oeuvre avec un quadrillage formé de triangles ou de tout autre polygone fermé. Elle a par ailleurs été décrite par application à une aube de turbomachine, mais le procédé peut être appliqué à toute autre pièce, en restant dans le cadre de l'invention.

## Revendications

1. Procédé de finition par usinage de la forme d'une pièce de turbomachine, dans lequel au moins une zone (8) est issue de fabrication avec une surépaisseur par rapport au profil recherché, ladite surépaisseur formant avec le profil environnant une première surface (10), l'usinage du procédé ayant pour objet, à l'aide d'un outil adapté (20), d'éliminer cette surépaisseur pour aboutir à une troisième surface, le profil théorique de la pièce étant par ailleurs défini par une seconde surface (11), **caractérisé en ce qu'**il comprend les étapes suivantes pour définir la position à donner au bout dudit outil au cours de l'usinage de ladite zone :
- définition sur la seconde surface (11) d'un quadrillage (13) formé de lignes croisées se coupant en des noeuds et délimitant des carreaux, ledit quadrillage recouvrant la zone à usiner (8) et s'étendant de sorte que la limite extérieure (12) de la zone à usiner (8) soit entièrement comprise à l'intérieur des lignes extérieures du quadrillage,
- définition de la position de chaque point (P) de contact entre la pièce et l'outil (20) pour un usinage selon le profil théorique, par une pondération en référence à la position des noeuds (Ni) du carreau dans lequel il est situé,
- mesure de l'écart delta(Ni) existant, pour chaque noeud Ni situé en dehors de la limite extérieure (12), entre la première surface (10) au niveau de ce noeud et la position théorique du noeud sur la seconde surface (11), ledit écart étant mesuré normalement à la seconde surface (11),
- calcul, de proche en proche, des écarts delta(Nj) pour chaque noeud Nj situé à l'intérieur de la limite extérieure (12), en sélectionnant le carreau auquel appartient ledit noeud et pour lequel les écarts delta(Ni) ou delta(Nj) des autres noeuds sont déjà connus, et en effectuant une interpolation à partir desdits écarts delta(Ni) ou delta(Nj), modulée selon la longueur des segments reliant lesdits noeuds.
- définition de l'écart delta(P) à appliquer en chaque point P pour aboutir à un point P' de contact entre la pièce et l'outil (20), par rapport au référentiel implanté dans la machine d'usinage, par la somme pondérée des delta(Ni) des noeuds du carreau auquel appartient ledit point P, à l'aide de ladite pondération effectuée en référence aux noeuds N(i).

2. Procédé selon la revendication 1 dans lequel la pondération s'effectue en affectant à chaque point P des coefficients de pondération (CPi) qui correspondent aux poids à donner aux noeuds dudit carreau pour qu'il soit le barycentre desdits noeuds affectés desdits coefficients.

3. Procédé selon l'une des revendications 1 ou 2 dans lequel les lignes formant le quadrillage sont des lignes droites.

4. Procédé selon l'une des revendications 1 à 3 dans lequel les polygones formant les carreaux sont des polygones à quatre côtés.

5. Procédé selon l'une des revendications 1 à 3 dans lequel les polygones formant les carreaux sont des polygones à trois côtés.

6. Procédé selon l'une des revendications 1 à 5 dans lequel au moins un des noeuds situé à l'extérieur de la limite extérieure (12) n'est pas porté par la seconde surface (11), l'écart delta(Ni) pour ce point étant alors calculé par une interpolation entre les écarts delta(Ni) des noeuds adjacents portés par ladite seconde surface, modulée selon la longueur des segments reliant lesdits noeuds.

## Patentansprüche

1. Verfahren zur Fertigstellung durch Bearbeitung der Form eines Teils einer Turbomaschine, wobei bei der Herstellung zumindest ein Bereich (8) mit eine Verdickung mit Bezug auf das angestrebte Profil entsteht, wobei die Verdickung mit dem umliegenden Profil eine erste Oberfläche (10) bildet, wobei die Bearbeitung durch das Verfahren das Ziel hat, mithilfe eines geeigneten Werkzeugs (20) diese Verdickung zu entfernen, um eine dritte Oberfläche zu erhalten, wobei das theoretische Profil des Teils außerdem durch eine zweite Oberfläche (11) definiert ist,
**dadurch gekennzeichnet, dass** es die folgenden Schritte umfasst, um die vorgegebene Position am Ende des Werkzeugs im Verlauf der Bearbeitung des Bereichs zu definieren:
- Definition eines Rasters (13), welches durch sich kreuzende Linien gebildet ist, die sich in Knoten schneiden und Kacheln begrenzen, auf der zweiten Oberfläche (11), wobei das Raster den zu bearbeitenden Bereich (8) umfasst und sich so erstreckt, dass die äußere Grenze (12) des zu bearbeitenden Bereichs (8) vollständig im Inneren der äußeren Linien des Rasters umfasst ist,
- Definition der Position von jedem Kontaktpunkt (P) zwischen dem Teil und dem Werkzeug (20) für eine Bearbeitung gemäß dem theoretischen Profil durch eine Gewichtung mit Bezug auf die Position der Knoten (Ni) der Kachel, in welcher er sich befindet.
- Messen der vorhandenen Abweichung Delta (Ni) für jeden Knoten Ni, der sich außerhalb der äußeren Grenze (12) befindet, zwischen der ersten Oberfläche (10) bei dem Knoten und der theoretischen Position des Knotens auf der zweiten Oberfläche (11), wobei die Abweichung in der Regel bei der zweiten Oberfläche (11) gemessen wird,
- Berechnung der Abweichungen Delta (Nj) für jeden Knoten Nj, der sich im Inneren der äußeren Grenze (12) befindet, durch Auswahl der Kachel, zu welcher der Knoten gehört und für welche die Abweichungen Delta (Ni) oder Delta (Nj) der anderen Knoten bereits bekannt sind, und durch Ausführung einer Interpolation ausgehend von den Abweichungen Delta (Ni) oder Delta (Nj), die gemäß der Länge des Segments angepasst ist, welche die Knoten verbindet,
- Definition der Abweichung Delta (P), die auf jeden Punkt P anzuwenden ist, um einen Kontaktpunkt P' zwischen dem Teil und dem Werkzeug (20) zu erreichen, mit Bezug auf ein Bezugssystem, welches in die Bearbeitungsmaschine implantiert ist, durch die gewichtete Summe der Delta(Ni) der Knoten der Kachel, zu welcher der Punkt P gehört, mithilfe der Gewichtung, die mit Bezug auf die Knoten N(i) durchgeführt wird.

2. Verfahren nach Anspruch 1, wobei die Gewichtung ausgeführt wird, indem für jeden Punkt Gewichtungskoeffizienten (CPi) bestimmt werden, die den Gewichten entsprechen, die den Knoten P der Kachel gegeben werden, damit er der Scherpunkt der Knoten ist, die die Koeffizienten bestimmen.

3. Verfahren nach Anspruch 1 oder 2, wobei die Linien, welche das Raster bilden, gerade Linien sind.

4. Verfahren nach einem der Ansprüche 1 bis 3, wobei die Polygone, welche die Kacheln bilden, Polygone mit vier Seiten sind.

5. Verfahren nach einem der Ansprüche 1 bis 3, wobei die Polygone, welche die Kacheln bilden, Polygone mit drei Seiten sind.

6. Verfahren nach einem der Ansprüche 1 bis 5, wobei zumindest einer der Knoten, der sich außerhalb der äußeren Grenze (12) befindet, nicht auf der zweiten Oberfläche (11) vorgesehen ist, wobei die Abweichung Delta (Ni) für diesen Punkt folglich durch eine Interpolation zwischen den Abweichungen Delta (Ni) der benachbarten Knoten berechnet wird, die auf der zweiten Ebene vorgesehen sind, die gemäß der Länge des Segments angepasst ist, welche die Knoten verbindet.

## Claims

1. Method for finishing the shape of a turbine engine blade by machining, in which at least one area (8) is produced thicker than the required profile, the said thickened portion forming a first surface (10) with the surrounding profile, the machining of the method being aimed at removing this thickened portion, using a suitable tool (20), to obtain a third surface, the theoretical profile of the component being moreover defined by a second surface (11), **characterised in that** it comprises the following steps to define the position of the bit of the said tool during machining of the said area:
- defining, on the second surface (11), a grid (13) formed by intersecting lines forming nodes and delimiting squares, the said grid covering the area to be machined (8) and extending so that the outer limit (12) of the machining area (8) is completely enclosed within the outer limits of the grid,
- defining the position of each point of contact (P) between the component and the tool (20) for machining along the theoretical profile, by weighting with reference to the position of the nodes (Ni) of the square in which it is located,
- measuring, for each node Ni located outside the outer limit (12), the delta(Ni) between the first surface (10) at said node and the theoretical position of the node on the second surface (11), the said difference being measured normal to the second surface (11),
- calculating, step by step, the differences delta(Nj) for each node Nj located within the outer limit (12), by selecting the square to which said node belongs and for which the delta(Ni) or delta(Nj) differences of the other nodes are already known, and interpolating from the said delta(Ni) or delta(Nj) differences, weighted according to the length of the segments connecting the said nodes,
- defining the delta(P) to be applied to each point P to obtain a point of contact P' between the component and the tool (20), relative to the reference input into the machine tool, by the weighted sum of the deltas(Ni) of the nodes of the square to which the said point P belongs, using the said weighting performed with reference to the nodes N(i).

2. Method according to claim 1, in which weighting is performed by assigning weighting coefficients (CPi) to each point P, corresponding to the weight to be assigned to the nodes of said square so that it is the barycentre of said nodes assigned said coefficients.

3. Method according to either claim 1 or claim 2, in which the lines forming the grid are straight lines.

4. Method according to any of claims 1 to 3, in which the polygons forming the squares are four-sided polygons.

5. Method according to any of claims 1 to 3, in which the polygons forming the squares are three-sided polygons.

6. Method according to any of claims 1 to 5, in which at least one of the nodes located outside the outer limit (12) is not borne by the second surface (11), the delta(Ni) difference for this point therefore being calculated by interpolation between the delta(Ni) differences of the adjacent nodes borne by said second surface, weighted according to the length of the segments connecting said nodes.
